# DEMANDE DE BREVET EUROPEEN

(11) **EP 1 033 077 A1**
(43) Date de publication de la demande: **06.09.2000**
(21) Numéro de dépôt: 00400572.4
(22) Date de dépôt: 02.03.2000
(51) Int. Cl.: A23B 7/154

(54) **Procédé de traitement de fruits et légumes**

(30) Priorité: 03.03.1999 FR 9902643
(71) Demandeur: XEDA INTERNATIONAL, 13670 Saint-Andiol (FR)
(72) Inventeur: Sardo, Alberto, 13160 Chateaurenard (FR); Bompeix, Gilbert, 75001 Paris (FR)
(74) Mandataire: Le Guen, Gérard

(57) **Abrégé**

L'invention concerne un procédé de traitement de fruits et légumes comprenant les étapes consistant à :
- porter à une température de 40 à 60°C une composition traitante liquide comprenant, dans un véhicule aqueux, un ou plusieurs tocophérols éventuellement sous forme de sels acceptables sur le plan alimentaire; et
- appliquer ladite composition traitante sur les fruits et légumes par immersion ou douchage, l'immersion respectivement le douchage, étant poursuivi pendant un temps inférieur ou égal à 10 minutes,
tout procédé utilisant à titre de composition traitante, une composition comprenant un ou plusieurs tocophérols en association avec un terpène choisi parmi l'eugénol, l'isoeugénol, leurs sels acceptables sur le plan alimentaire et leurs mélanges étant exclu du cadre de l'invention.

Ce procédé est particulièrement approprié au traitement des salades, des pommes et des poires après récolte.

## Description

La présente invention concerne un procédé de traitement des fruits et légumes frais.

Après leur récolte, les fruits et légumes frais sont couramment stockés, pendant une période qui peut être relativement longue, avant d'être mis sur le marché pour une consommation rapide.

Au cours de cette période de stockage, il importe que les fruits et légumes ne perdent pas leurs qualités, notamment leur aspect. Celles-ci peuvent être dégradées, en particulier par la prolifération de champignons à la surface du fruit ou du légume, qui conduit à la détérioration rapide du fruit ou du légume touché, par oxydation (cas des salades coupées), ou par le phénomène d'échaudure de prematurité (ou "scald") qui se traduit par un noircissement de la peau des fruits ou légumes dû à des produits oxydés, s'accumulant dans le couche cireuse de surface, phénomène qui peut gagner la pulpe des fruits (cas des pommes et des poires). Ces détériorations sont encore plus rapides si le fruit ou le légume présente des micro-blessures constituées par des entailles dans la peau.

De façon à retarder le plus possible le dégradation des fruits et des légumes, il est connu de les traiter, avant stockage, par des agents présentant une activité antioxydante.

A titre de substances antioxydantes, on connaît de nombreux produits de synthèse tels que la diphénylamine; l'éthoxyquine; le 3-tert-butyl-4-hydroxy-anisole et le 2-tert-butyl-4-hydroxy-anisole (BHA); le 2,6-ditert-butyl-p-crésol (BHT); et la tert-butylhydroquinone (TBHQ).

Ces composés sont habituellement appliqués sur les fruits et légumes à température ambiante du fait de leur puissante activité antioxydante. Ils peuvent présenter néanmoins une certaine toxicité pour le consommateur.

De façon à pallier cet inconvénient, la demande FR 96 03 100 propose un procédé de traitement des fruits et légumes utilisant des substances naturelles, peu, voire pas efficaces à température ambiante, à savoir les polyphénols, comme agents antioxydants. Ce procédé implique le traitement des fruits et légumes à une température comprise entre 40 et 60°C.

Plus précisément, FR 96 03 100 décrit un procédé de traitement des fruits et des légumes comprenant les étapes consistant à :
- porter à une température de 40 à 60° C une composition traitante liquide comprenant, dans un véhicule aqueux, au moins un agent traitant choisi parmi un agent antioxydant de type polyphénol, un composé terpénique et leurs mélanges, et
- mettre les fruits ou légumes dans la composition traitante liquide à ladite température pendant une durée inférieure ou égale à 10 minutes.

Ainsi le procédé de FR 96 03 100 a pour effet d'amplifier le faible pouvoir antioxydant des polyphénols.

Cependant ce procédé s'est révélé bien moins efficace dans le cas d'autres substances antioxydantes d'origine naturelle tels que par exemple l'acide ascorbique (ou vitamine C). Et, de fait dans le cas de l'acide ascorbique, l'activité antioxydante n'est que très légèrement augmentée par mise en oeuvre d'un procédé comprenant l'application à chaud (40 à 60°C) de la composition traitante par rapport à l'activité observée par application à température ambiante.

Les présents inventeurs ont découvert de façon tout-à-fait inattendue que les tocophérols qui présentent une très faible activité antioxydante lorsqu'appliqués à température ambiante, voient cette activité fortement amplifiée par application à chaud sur les fruits et légumes.

Ce résultat est d'autant plus inattendu que les tocophérols ne présentent qu'une seule fonction phénolique, un ensemble de groupes lipophiles et une activité quasiment nulle à température ambiante. Les tocophérols sont les dérivés méthylés du tocol lequel a pour formule :

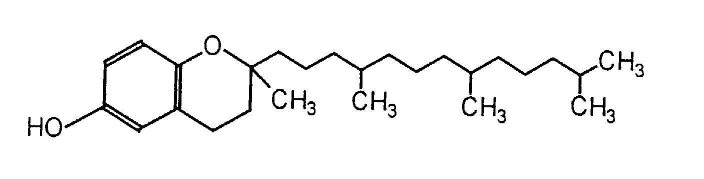

Ainsi l'a-tocophérol est le 5,7,8-triméthyltocol; le β-tocophérol est le 5,8-diméthyltocol; le γ-tocophérol est le 7,8-diméthyltocol; et le δ-tocophérol est le 8-méthyltocol.

L'invention repose donc sur cette découverte.

Plus précisément, le procédé de l'invention comprend les étapes consistant à :
- porter à une température de 40 à 60°C une composition traitante liquide comprenant, dans un véhicule aqueux, un ou plusieurs tocophérols éventuellement sous forme de sels acceptables sur le plan alimentaire; et
- appliquer ladite composition traitante sur les fruits et légumes par immersion ou douchage, l'immersion respectivement le douchage, étant poursuivi pendant un temps inférieur ou égal à 10 minutes.

Les tocophérols utilisables selon l'invention sont ceux présentant une activité antioxydante. Parmi ceux-ci, on compte l'α-tocophérol (ou vitamine E), le β-tocophérol, le γ-tocophérol et le δ-tocophérol. L'α-tocophérol est un tocophérol préféré qu'il soit utilisé en tant que tel ou sous la forme de l'un de ses sels acceptables sur le plan alimentaire.

La composition traitante peut comprendre en effet un ou plusieurs des tocophérols sous la forme de sel acceptable sur le plan alimentaire. Des sels particulièrement préférés sont notamment les sels de métaux alcalins tels que les sels de sodium, les sels de lithium et les sels de potassium.

De façon avantageuse, la composition traitante comprend l'a-tocophérol.

Il doit être entendu que tout procédé utilisant à titre de composition traitante une composition comprenant un ou plusieurs tocophérols en association avec un terpène choisi parmi l'eugénol, l'isoeugénol, leurs sels acceptables sur le plan alimentaire et leurs mélanges est exclu de l'objet de la présente demande et donc de la protection recherchée.

Selon l'invention, le traitement des fruits et légumes peut être mis en oeuvre juste après la récolte ou bien encore pendant la période de conservation et de stockage des fruits et légumes. De préférence, ce traitement est réalisé juste après récolte. En tout état de cause, le procédé de l'invention ne comprend pas d'étape préliminaire de refroidissement à coeur des fruits et légumes par immersion en douchage. au moyen d'une composition aqueuse de refroidissement présentant une température de 0 à 15°C.

En d'autres termes, avant application de la composition traitante chaude, les fruits et légumes traités ne sont pas soumis à un traitement par hydrocooling par une composition aqueuse présentant une température comprise entre 0 et 15°C.

Le procédé de l'invention est particulièrement approprié au traitement des salades, des pommes et des poires.

Le procédé de l'invention implique le traitement des fruits et légumes par une composition aqueuse (dite composition traitante) présentant une température comprise entre 40 et 60° C, de préférence entre 45 et 55° C, mieux encore entre 48 et 52° C, par exemple 50° C.

La composition traitante se présente avantageusement sous forme de solution ou de dispersion dans un véhicule aqueux.

Selon que le principe actif antioxydant est plus ou moins soluble dans l'eau, la composition peut également comprendre en outre au moins un tensioactif choisi de façon connue en soi parmi les tensioactifs non-ioniques, anioniques, cationiques et amphotères.

Selon l'invention, la composition traitante comprend de 500 à 10 000 ppm en poids de tocophérol(s) (éventuellement sous forme de sels), de préférence de 1000 à 5000 ppm, par exemple 3000 ppm.

L'application de la composition traitante aux fruits et légumes est réalisée soit par immersion, soit par douchage.

La durée de cette opération est très courte, généralement inférieure ou égale à 10 minutes, notamment de 30 secondes à 10 minutes, avantageusement de 30 secondes à 5 minutes. Un temps de contact de 2 à 3 minutes est le plus souvent suffisant.

L'application de la composition se fait de préférence de telle sorte que la quantité d'agent antioxydant utilisé est de 2 à 40 g/tonne de fruits ou légumes traités.

Lorsque la durée de traitement par la composition chaude désirée est atteinte, il peut être mis fin à l'application par tous moyens connus, notamment par simple arrêt du douchage ou retrait des fruits ou légumes du bac d'immersion. Les fruits ou légumes sont alors aptes à être stockés en vue de leur distribution ultérieure.

Dans une variante avantageuse, en particulier dans le cas des fruits ou légumes sensibles à la chaleur, le procédé peut comprendre en outre une étape consistant à refroidir rapidement les fruits ou légumes qui ont été mis au contact de la composition traitante chaude, et ce jusqu'à une température inférieure ou égale à la température ambiante (15 à 25° C).

Ce refroidissement peut être réalisé par circulation d'air ou par contact avec de l'eau (notamment immersion ou aspersion) dont la température est inférieure ou égale à la température ambiante.

De façon surprenante, le procédé de l'invention conduit à une nette augmentation de l'activité antioxydante des tocophérols.

Ce procédé est particulièrement avantageux dans la mesure où il met en oeuvre des substances naturelles dont l'ingestion est dans danger pour le consommateur et dans la mesure où il permet l'utilisation de moindres quantités d'un principe actif bon marché.

Selon un autre de ses aspects, l'invention concerne l'utilisation d'une composition traitante aqueuse portée à une température de 40 à 60°C et comprenant à titre de principe actif antioxydant, un ou plusieurs tocophérols éventuellement sous la forme de sel(s) acceptable(s) sur le plan alimentaire pour le traitement antioxydant des fruits et légumes et notamment des pommes et des poires. L'utilisation d'une composition comprenant l'association de tocophérol(s) éventuellement sous la forme de sels, avec un terpène choisi parmi l'eugénol, l'isoeugénol, leurs sels acceptables sur le plan alimentaire et leurs mélanges est néanmoins exclue de l'objet de la présente invention.

Les exemples suivants illustrent plus avant l'invention. Dans ces exemples, on applique pendant 3 minutes la composition traitante, préalablement portée à 50° C, à des pommes Granny Smith, par immersion ou douchage.

Dans les exemples suivants, ppm désigne des parties par million en poids.

### EXEMPLE 1

### Traitement anti-échaudure sur des pommes par action d'α-tocophérol

La composition traitante (Composition A) est constituée d'eau et de 1500 ppm d'α-tocophérol. Le traitement est réalisé par application de la composition traitante portée à 50° C sur les pommes pendant 3 minutes.

On stocke ensuite les pommes traitées à température ambiante (20° C) pendant 8 jours. On quantifie alors la proportion de pommes saines, la proportion de pommes dont moins de 1 cm² de surface est détériorée par échaudure et la proportion de pommes dont plus de 1 cm² de surface est touchée.

Les résultats obtenus sont rapportés dans le tableau suivant.

Le témoin figurant dans ce tableau concerne les résultats obtenus dans le cas de pommes non traitées et stockées pendant 8 jours, à température ambiante (20° C).

Cette dernière étude a porté sur le même nombre de pommes que dans les cas précédents.

**TABLEAU 1**

| Composition traitante | Pommes saines (%) | Pommes touchées à raison de moins de 1 cm² (%) | Pommes touchées à raison de plus de 1 cm² (%) |
|---|---|---|---|
| A | 83 | 2 | 15 |
| témoin | 47 | 4 | 49 |

### EXEMPLE 2 (comparatif)

### Traitement anti-échaudure sur des pommes par action de polyphénols, d'eugénol ou d'acide ascorbique

On prépare les compositions traitantes B à D suivantes :

La composition B constituée d'eau et de 5000 ppm d'un extrait concentré d'épinard (comprenant de 50 à 95% en poids de polyphénols).

La composition C constituée d'eau et de 2500 ppm d'eugénol.

La composition D constituée d'eau et de 5000 ppm d'acide ascorbiaue.

Le traitement des pommes est réalisé dans les mêmes conditions qu'à l'exemple 1.

Les résultats obtenus sont rapportés dans le tableau 2 ci-dessous.

Le témoin figurant dans ce tableau concerne les résultats obtenus dans le cas de pommes non traitées et stockées pendant 8 jours à température ambiante (20°C).

Cette étude a porté sur le même nombre de pommes que dans le cas précédent.

**TABLEAU 2**

| Composition traitante | Pommes saines (%) | Pommes touchées à raison de moins de 1 cm² (%) | Pommes touchées à raison de plus de 1 cm² (%) |
|---|---|---|---|
| B | 71 | 3 | 26 |
| C | 49 | 5 | 46 |
| D | 53 | 3 | 44 |
| témoin | 47 | 4 | 49 |

A titre de comparaison supplémentaire, une même quantité de pommes a été traitée par la composition D maintenue à température ambiante ( à savoir entre 20 et 22°C).

Puis les pommes ainsi traitées ont été stockées 8 jours à température ambiante (20°C).

Suite à ce traitement, on dénombre :
- 45% de pommes saines;
- 4% de pommes touchées à raison de moins de 1cm² (%);
- 51% de pommes touchées à raison de plus de 1cm² (%).

Ces résultats montrent clairement le caractère inattendu de l'invention.

Alors que dans le cas de l'acide ascorbique, l'application à 50°C de la composition traitante n'augmente que très peu son activité antioxydante, l'activité antioxydante de la vitamine E (dont l'activité à température ambiante est quasiment nulle) se révèle même supérieure, dans les mêmes conditions de traitement, à celles des polyphénols.

## Revendications

1. Procédé de traitement de fruits et légumes comprenant les étapes consistant à :
- porter à une température de 40 à 60°C une composition traitante liquide comprenant, dans un véhicule aqueux, un ou plusieurs tocophérols éventuellement sous forme de sels acceptables sur le plan alimentaire; et
- appliquer ladite composition traitante sur les fruits et légumes par immersion ou douchage, l'immersion respectivement le douchage, étant poursuivi pendant un temps inférieur ou égal à 10 minutes,
à l'exclusion d'un procédé utilisant à titre de composition traitante, une composition comprenant un ou plusieurs tocophérols en association avec un terpène choisi parmi l'eugénol, l'isoeugénol, leurs sels acceptables sur le plan alimentaire et leurs mélanges.

2. Procédé selon la revendication 1, caractérisé en ce que la composition traitante est portée à une température comprise entre 48 et 52°C.

3. Procédé selon l'une quelconque des revendications 1 et 2, caractérisé en ce que la composition traitante comprend de 500 à 10 000 ppm en poids de tocophérol(s).

4. Procédé selon la revendication 3, caractérisé en ce que la composition traitante comprend de 1000 à 5000 ppm en poids de tocophérol(s).

5. Procédé selon l'une quelconque des revendications précédentes pour le traitement des salades, des pommes et des poires.

6. Procédé selon l'une quelconque des revendications précédentes, caractérisé en ce que la composition traitante comprend l'α-tocophérol éventuellement sous forme de sel acceptable sur le plan alimentaire.

7. Procédé selon la revendication 6, caractérisé en ce que le sel acceptable sur le plan alimentaire est un sel de métal alcalin.

8. Utilisation d'une composition traitante aqueuse portée à une température de 40 à 60°C et comprenant à titre de principe actif antioxydant, un ou plusieurs tocophérols éventuellement sous la forme de sel(s) acceptable(s) sur le plan alimentaire pour le traitement antioxydant des fruits et légumes, l'utilisation d'une composition traitante comprenant l'association de tocophérols avec un terpène choisi parmi l'eugénol, l'isoeugénol, leurs sels acceptables sur le plan alimentaire et leurs mélanges, étant exclue.
